# EUROPEAN PATENT APPLICATION

(11) **EP 4 686 302 A1**
(43) Date of publication of application: **28.01.2026**
(21) Application number: 24774166.3
(22) Date of filing: 20.03.2024
(51) Int. Cl.: H04W 72/542, H04W 24/10

(54) **METHOD AND APPARATUS FOR WIRELESS COMMUNICATION**

(30) Priority: 23.03.2023 CN 202310294375
(71) Applicant: Apogee Networks, LLC, Dallas, TX 75201 (US)
(72) Inventor: YANG, Lin, Shanghai 201206 (CN); ZHANG, Xiaobo, Shanghai 201206 (CN)
(74) Representative: Gunzelmann, Rainer
(86) International application number: PCT/CN2024/082782
(87) International publication number: WO 2024/193601

(57) **Abstract**

Disclosed are a method and apparatus for wireless communication. The method comprises: a first node receiving a first message, the first message being used for determining at least a first RS resource; and sending first channel information and a first PMI in a first physical layer channel. A measurement for the first RS resource is used for generating the first channel information and the first PMI, and the first channel information is used for determining a non-codebook channel matrix. The present application can ensure performance monitoring of channel information, avoid excessive air interface overhead, and achieve good compatibility.

## Description

### Technical Field

The present application relates to methods and apparatuses in wireless communication, in particular to a scheme and apparatus for channel status information (CSI) in a wireless communication system.

### Background Art

In traditional wireless communication, reporting of user equipment (UE) may comprise at least one of a variety of auxiliary information, such as channel status information (CSI), auxiliary information related to beam management, and auxiliary information related to positioning, wherein the CSI comprises a CSI-RS resource indicator (CRI), a rank indicator (RI), a precoding matrix indicator (PMI) or a channel quality indicator (CQI), etc.

A network device selects appropriate transmission parameters for the UE according to reporting of the UE, such as a resident cell, a modulation and coding scheme (MCS), a transmitted precoding matrix indicator (TPMI), and a transmission configuration indication (TCI). In addition, the UE reporting may be used for optimizing network parameters, such as better cell coverage, and switching base stations on or off according to UE locations.

In a new radio (NR) system, a priority of CSI reporting is defined. The priority is used for determining whether to allocate a CSI processing unit (CPU) resource for corresponding CSI reporting so as to perform an update or whether to drop the corresponding CSI reporting.

As the number of antennas increases, traditional PMI feedback methods bring a large amount of redundant overhead. Therefore, in NR R (release) 18, the CSI compression based on artificial intelligence (AI) or machine learning (ML) was initiated.

### Summary of the Invention

In a traditional scheme, a base station configures the type of reported CSI for one reference signal (RS) resource; and through research, the applicant finds that an existing scheme for configuring the type of CSI may not be applicable to new channel information.

In view of the above issue, the present application discloses a solution. It should be noted that although a large amount of embodiments of the present application are developed for AI/ML, the present application is also applicable to solutions based on, for example, linear channel reconstruction; in particular, considering that specific channel reconstruction algorithms may be non-standardized or implemented independently by hardware vendors. Further, a scheme of adopting unified user equipment (UE) for reporting can reduce implementation complexity or improve performance. In case of no conflict, embodiments and features in the embodiments in any node of the present application may be applied to any other node. In case of no conflict, the embodiments and features in the embodiments of the present application may be arbitrarily combined with each other.

Where necessary, interpretations of terminologies in the present application may be referred to descriptions of the specification protocol TS37 series and TS38 series of the 3rd Generation Partner Project (3GPP).

The present application discloses a method in a first node used for wireless communication, comprising:
receiving a first message, the first message being used for determining at least a first RS resource; and
sending first channel information and a first PMI in a first physical layer channel,
wherein a measurement for the first RS resource is used for generating the first channel information and the first PMI; and the first channel information meets at least one of the following:
   a channel parameter recovered by a recipient based on the first channel information received is unknown to the first node;
   a generator for generating the first channel information is obtained based on training; and
   the first channel information does not belong to CSI defined in 3GPP Rel-17 or a previous version of 3GPP Rel-17.

As one embodiment, the above method can more flexibly report new channel information and traditional CSI.

As one embodiment, the above method more conveniently compares the new channel information with the traditional CSI.

Specifically, according to one aspect of the present application, the above method is characterized by comprising:
receiving a second message, the second message being used for determining a CSI reference resource for the first channel information and a CSI reference resource for the first PMI.

As one embodiment, the above method provides configuration flexibility.

As one embodiment, the above method improves efficiency of channel information reporting and saves air interface overhead.

Specifically, according to one aspect of the present application, the above method is characterized in that the CSI reference resource for the first channel information and the CSI reference resource for the first PMI are orthogonal in frequency domain.

Specifically, according to one aspect of the present application, the above method is characterized in that the CSI reference resource for the first channel information and the CSI reference resource for the first PMI are orthogonal in time domain.

For either of the above two aspects, while reporting flexibility is improved, introducing unnecessary redundant overhead is avoided.

Specifically, according to one aspect of the present application, the above method is characterized in that the first channel information and the first PMI correspond to different layers in space domain.

As one embodiment, a value of an RI corresponding to the first channel information is different from a value of an RI corresponding to the first PMI.

As one embodiment, a value of an RI corresponding to the first channel information is the same as a value of an RI corresponding to the first PMI, and any layer corresponding to the first channel information is different from any layer corresponding to the first PMI.

Specifically, according to one aspect of the present application, the above method is characterized by comprising:
receiving a first RS and a second RS; and
sending a third message,
wherein at least the first channel information and at least the first PMI are used for multi-antenna sending of the first RS and multi-antenna sending of the second RS, respectively; and the third message depends on at least one of a received quality of the first RS and a received quality of the second RS.

As one embodiment, the above aspects provide timely feedback or monitoring of performance of the first channel information and the first PMI.

As one embodiment, the above aspects facilitate timely switching of a feedback type of the CSI.

The present application discloses a method in a second node used for wireless communication, comprising:
sending a first message, the first message being used for determining at least a first RS resource; and
receiving first channel information and a first PMI in a first physical layer channel,
wherein a measurement for the first RS resource is used for generating the first channel information and the first PMI; and the first channel information meets at least one of the following:
   a channel parameter recovered by the second node based on the first channel information received is unknown to a sender of the first channel information;
   a generator for generating the first channel information is obtained based on training; and
   the first channel information does not belong to CSI defined in 3GPP Rel-17 or a previous version of 3GPP Rel-17.

The present application discloses a first node used for wireless communication, comprising:
a first receiver receiving a first message, the first message being used for determining at least a first RS resource; and
a first transmitter sending first channel information and a first PMI in a first physical layer channel,
wherein a measurement for the first RS resource is used for generating the first channel information and the first PMI; and the first channel information meets at least one of the following:
   a channel parameter recovered by a recipient based on the first channel information received is unknown to the first node;
   a generator for generating the first channel information is obtained based on training; and
   the first channel information does not belong to CSI defined in 3GPP Rel-17 or a previous version of 3GPP Rel-17.

The present application discloses a second node used for wireless communication, comprising:
a second transmitter sending a first message, the first message being used for determining at least a first RS resource; and
a second receiver receiving first channel information and a first PMI in a first physical layer channel,
wherein a measurement for the first RS resource is used for generating the first channel information and the first PMI; and the first channel information meets at least one of the following:
   a channel parameter recovered by the second node based on the first channel information received is unknown to a sender of the first channel information;
   a generator for generating the first channel information is obtained based on training; and
   the first channel information does not belong to CSI defined in 3GPP Rel-17 or a previous version of 3GPP Rel-17.

### Brief Description of the Drawings

Other features, purposes and advantages of the present application will become more apparent from reading the detailed description of the non-limiting embodiments made with reference to the following drawings:
FIG. 1 shows a flowchart of communication of a first node according to one embodiment of the present application;
FIG. 2 shows a schematic diagram of a network architecture according to one embodiment of the present application;
FIG. 3 shows a schematic diagram of an embodiment of a radio protocol architecture of a user plane and a control plane according to one embodiment of the present application;
FIG. 4 shows a schematic diagram of a hardware module of a communication node according to one embodiment of the present application;
FIG. 5 shows a flowchart of a transmission between a first node and a second node according to one embodiment of the present application;
FIGS. 6a, 6b, 6c, and 6d respectively show schematic diagrams of four different CSI reference resources;
FIG. 7 shows a schematic diagram of an artificial intelligence processing system according to one embodiment of the present application;
FIG. 8 shows a flowchart of a transmission of first channel information according to one embodiment of the present application;
FIG. 9 shows a schematic diagram of a first encoder according to one embodiment of the present application;
FIG. 10 shows a schematic diagram of a first function according to one embodiment of the present application;
FIG. 11 shows a schematic diagram of one decoding layer group according to one embodiment of the present application;
FIG. 12 shows a structural block diagram of a processing apparatus used in a first node according to one embodiment of the present application;
FIG. 13 shows a structural block diagram of a processing apparatus used in a second node according to one embodiment of the present application; and
FIG. 14 shows a flowchart of a measurement in a first RS resource according to one embodiment of the present application.

### Detailed Description of Embodiments

The technical solution of the present application will be further described in detail below in conjunction with the drawings. It should be noted that, in case of no conflict, embodiments and features in the embodiments in the present application may be arbitrarily combined with each other.

### Embodiment 1

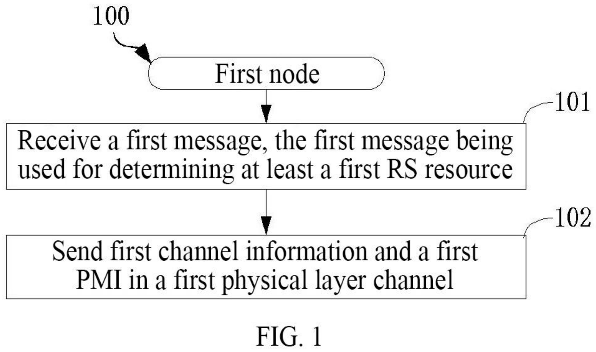

Embodiment 1 illustrates a flowchart of communication of a first node according to one embodiment of the present application, as shown in FIG. 1.

A first node 100 receives a first message in step 101, the first message being used for determining at least a first RS resource; and sends first channel information and a first PMI in a first physical layer channel in step S102.

In Embodiment 1, a measurement for the first RS resource is used for generating the first channel information and the first PMI; and the first channel information meets at least one of the following:
a channel parameter recovered by a recipient based on the first channel information received is unknown to the first node;
a generator for generating the first channel information is obtained based on training; and
the first channel information does not belong to CSI defined in 3GPP Rel-17 or a previous version of 3GPP Rel-17.

As one embodiment, the first message comprises at least one medium access control (MAC) control element (CE).

As one embodiment, the first message comprises one piece of downlink control information (DCI).

As one embodiment, the first message belongs to one radio resource control (RRC) information element (IE).

As one embodiment, a name of the one RRC IE comprises CSI-ReportConfig.

As one embodiment, the one RRC IE is CSI-ReportConfig IE.

As one embodiment, the first message comprises configuration information of the at least first RS resource.

As one embodiment, the first message comprises a first index, the first index being used for identifying the configuration information of the at least first RS resource.

As one embodiment, the first index is CSI-ResourceConfigId IE.

As one embodiment, the first message comprises an index of each RS resource in the at least first RS resource.

As one embodiment, the at least first RS resource only comprises the first RS resource.

As one embodiment, the at least first RS resource comprises a second RS resource, wherein the first RS resource is used for a channel measurement, and the second RS resource is used for an interference measurement.

As one embodiment, any RS resource of the at least first RS resource is a channel status information reference signal (CSI-RS) resource.

As one embodiment, the first physical layer channel is a physical uplink shared channel (PUSCH).

As one embodiment, the first physical layer channel is a physical uplink control channel (PUCCH).

As one embodiment, the first channel information indicates a precoding matrix.

As one embodiment, the recovered channel parameter is a precoding matrix.

As one embodiment, the precoding matrix is in a spatial-frequency domain.

As one embodiment, the precoding matrix is in an angular-delay domain projection.

As one embodiment, the first channel information indicates a raw channel matrix.

As one embodiment, the recovered channel parameter is a raw channel matrix.

As one embodiment, the raw channel matrix is in a spatial-frequency domain.

As one embodiment, the raw channel matrix is in an angular-delay domain.

As one embodiment, the first channel information is used for determining a phase, or an amplitude, or a coefficient between at least two antenna ports.

As one embodiment, the first channel information is used for determining at least one eigenvector.

As one embodiment, the first channel information is used for determining at least one eigenvalue.

As one embodiment, the at least first RS resource is indicated by resourcesForChannelMeasurement in the first message, or csi-IM-ResourcesForInterference in the first message, or nzp-CSI-RS-ResourcesForInterference in the first message.

As one embodiment, the first channel information and the first PMI are for channels on the same bandwidth part (BWP).

As one embodiment, the first channel information and the first PMI are respectively for one subband.

As one embodiment, one subband comprises a positive integer number of physical resource blocks (PRBs) in frequency domain.

As one embodiment, a first node 100 sends a plurality of pieces of CSI in the first physical layer channel in step S102. The plurality of pieces of CSI, the first channel information, and the first PMI are respectively one of the plurality of pieces of CSI; and the measurement for the first RS resource is used for generating any CSI of the plurality of pieces of CSI.

As one embodiment, any CSI of the plurality of pieces of CSI indicates a phase, or an amplitude, or a coefficient between at least two antenna ports.

As one embodiment, any CSI of the plurality of pieces of CSI indicates (or is used for recovering) one precoding matrix.

As one embodiment, the number of CSI comprised in the plurality of pieces of CSI is greater than 2.

As one embodiment, CSI reference resources of any 2 pieces of CSI of the plurality of pieces of CSI are orthogonal (i.e., non-overlapping in time domain or non-overlapping in frequency domain).

As one embodiment, the first PMI is a type I codebook index. When the type of the first channel information is a PMI, Q1 is 1.

As one embodiment, the first PMI is a type II codebook index. When the type of the first channel information is a PMI, Q1 is 1.

As one embodiment, the first PMI is based on an enhanced Type II codebook, and only one piece of channel information of the PMI type is comprised in the plurality of pieces of channel information.

### Embodiment 2

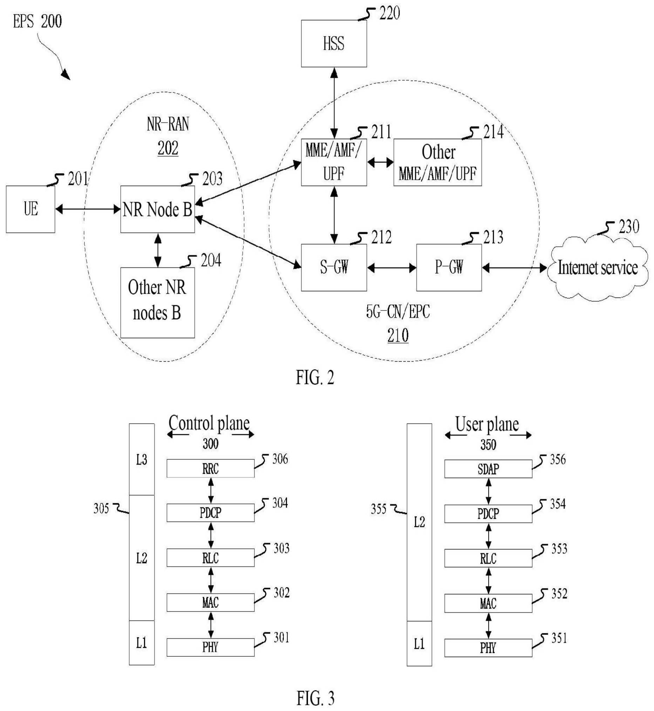

Embodiment 2 illustrates a schematic diagram of a network architecture according to one embodiment of the present application, as shown in FIG. 2. FIG. 2 illustrates a system architecture of a 5G NewRadio (NR), long-term evolution (LTE), and long-term evolution advanced (LTE-A). The 5G NR or LTE network architecture 200 may be referred to as 5GSystem (5GS)/evolved packet system (EPS) or some other suitable terminologies. The EPS 200 may comprise one piece of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, but those skilled in the art will readily appreciate that various concepts presented throughout the present application may be extended to networks providing circuit switching services or other cellular networks. The NG-RAN comprises an NR node B (gNB) 203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base transceiver station, a radio base station, a radio transceiving device, a transceiving device function, a basic service set (BSS), an extended service set (ESS), a TRP, or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted through the S-GW212, wherein the S-GW212 itself is connected to the P-GW213. The P-GW213 provides UE IP address allocation and other functions. The P-GW213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node in the present application, and the gNB203 corresponds to a second node in the present application.

As one embodiment, the UE201 supports generating reporting using artificial intelligence (AI) or machine learning.

As one embodiment, the UE201 supports generating a trained model using training data or generating part of parameters of a trained model using trained data.

As one embodiment, the UE201 supports determining at least part of parameters of conventional neural networks (CNNs) used for CSI reconstruction through training.

As one embodiment, the UE201 supports determining a transformer used for CSI reconstruction through training.

As one embodiment, the UE201 is a terminal that supports Massive-MIMO.

As one embodiment, the gNB203 supports a transmission based on Massive-MIMO.

As one embodiment, the gNB203 supports decompression on the CSI using the AI or deep learning.

As one embodiment, the gNB203 is a macrocellular base station.

As one embodiment, the gNB203 is a micro cell base station.

As one embodiment, the gNB203 is a picocell base station.

As one embodiment, the gNB203 is a femtocell.

As one embodiment, the gNB203 is a base station device that supports large latency difference.

As one embodiment, the gNB203 is one flying platform device.

As one embodiment, the gNB203 is a satellite device.

As one embodiment, the first node and the second node in the present application are respectively the UE201 and the gNB203.

### Embodiment 3

Embodiment 3 shows a schematic diagram of an embodiment of a radio protocol architecture for a user plane and a control plane according to the present application, as shown in FIG. 3. FIG. 3 is the schematic diagram illustrating the embodiment of a radio protocol architecture for a user plane 350 and a control plane 300. FIG. 3 illustrates the radio protocol architecture for the control plane 300 between a first node device (an RSU in UE or V2X, an on-board device, or an on-board communication module) and a second node device (a gNB, a RSU in UE or V2X, the on-board device, or the on-board communication module), or between two pieces of UE, using three layers: a Layer 1, a Layer 2, and a Layer 3. The Layer 1 (L1 layer) is a lowest layer and implements various physical layer (PHY) signal processing functions. The L1 layer will be referred to as a PHY301 herein. A Layer 2 (L2 layer) 305 is above the PHY301, and is responsible for a link between the first node device and the second node device and two pieces of UE through the PHY301. The L2 layer 305 comprises a medium access control (MAC) sublayer 302, a radio link control (RLC) sublayer 303, and a packet data convergence protocol (PDCP) sublayer 304, which terminate at the second node device. The PDCP sublayer 304 provides data encryption and integrity protection, and the PDCP sublayer 304 also provides handover support of the first node device for the second node device. The RLC sublayer 303 provides data packet segmentation and reassembly, and retransmits lost data packets through an ARQ. The RLC sublayer 303 also provides duplicate data packet detection and protocol error detection. The MAC sublayer 302 provides mapping between a logical channel and a transmission channel and multiplexing of the logical channel. The MAC sublayer 302 is also responsible for allocating various radio resources (e.g., resource blocks) in one cell between the first node devices. The MAC sublayer 302 is also responsible for HARQ operations. A radio resource control (RRC) sublayer 306 in the Layer 3 (L3 layer) in the control plane 300 is responsible for obtaining radio resources (i.e., radio bearers) and configuring lower layers using RRC signalings between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as that for the corresponding layers and sublayers in the control plane 300 as for a physical layer 351, a PDCP sublayer 354 in an L2 layer 355, an RLC sublayer 353 in the L2 layer 355, and an MAC sublayer 352 in the L2 355, but the PDCP sublayer 354 also provides header compression for upper layer data packets to reduce the radio sending overhead. The L2 layer 355 in the user plane 350 also comprises a service data adaptation protocol (SDAP) sublayer 356, and the SDAP sublayer 356 is responsible for mapping between a QoS stream and a data radio bearer (DRB) to support the diversity of services. Although not shown in the figure, the first node device may have a plurality of upper layers above the L2 layer 355, comprising a network layer (e.g., an IP layer) terminating at the P-GW on the network side and an application layer terminating at the other end (e.g., remote UE and a server) of the connection.

As one embodiment, the radio protocol architecture in FIG. 3 is applicable to a first node in the present application.

As one embodiment, the radio protocol architecture in FIG. 3 is applicable to a second node in the present application.

As one embodiment, a reference signal in the present application is generated in the PHY301.

As one embodiment, first channel information and a first PMI in the present application are generated in the PHY301.

As one embodiment, the first channel information in the present application is generated in the MAC sublayer 302.

As one embodiment, a first CQI in the present application is generated in the PHY301.

As one embodiment, a first message in the present application is generated in the RRC sublayer 306.

As one embodiment, the first message in the present application is generated in the MAC sublayer 302.

### Embodiment 4

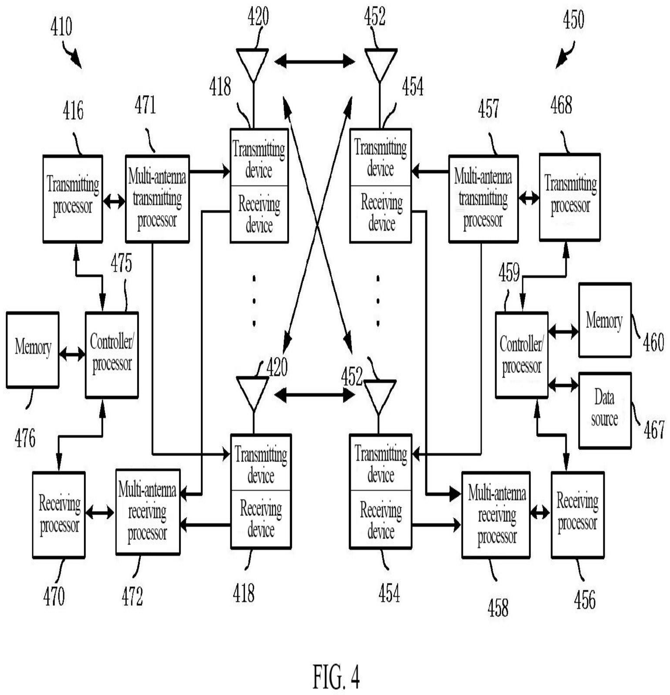

Embodiment 4 shows a schematic diagram of a hardware module of a communication node according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In a transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets, and signalings to the first communication device 450. The transmitting processor 416 and the multi-antenna transmitting processor 471 implement various signal processing functions for an L1 layer (i.e., a physical layer). The transmitting processor 416 implements channel encoding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding and beamforming processing on the coded and modulated symbols to generate one or more spatial streams. The transmitting processor 416 then maps each spatial stream to a subcarrier, multiplexes with a reference signal (e.g., a pilot) in a time domain and/or frequency domain, and then uses an inverse fast Fourier transform (IFFT) to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, and converts a radio frequency stream into a baseband multi-carrier symbol stream to be provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a Fast Fourier Transform (FFT) to convert the baseband multi-carrier symbol stream subjected to the receiving analog precoding/beamforming operation from the time domain to the frequency domain. In a frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and soft decisions are generated. The receiving processor 456 then deinterleaves and channel-decodes the soft decisions to recover the upper layer data and control signals transmitted by the second communication device 410 on the physical channel. The upper-layer data and control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In a transmission from the first communication device 450 to the second communication device 410, at the first communication device 450, the upper-layer data packets are provided to the controller/processor 459 using the data source 467. The data source 467 represents all protocol layers above the L2 layer. Similar to the sending function at the second communication device 410 as described in the transmission from the second communication device 410 to the first communication device 450, the controller/processor 459 implements header compression, encryption, packet segmentation and reordering, and multiplexing between logical and transport channels based on radio resource allocation, and implements the function of the L2 layer for the user plane and the control plane. The controller/processor 459 is also responsible for retransmission of lost packets, and signalings to the second communication device 410. The transmitting processor 468 executes channel encoding, interleaving and modulation mapping, the multi-antenna transmitting processor 457 performs digital multi-antenna spatial precoding, comprising codebook-based precoding and non-codebook-based precoding, and beamforming processing, the transmitting processor 468 then modulates the generated spatial stream into a multi-carrier/single-carrier symbol stream, and after analog precoding/beamforming operations in the multi-antenna transmitting processor 457, the multi-carrier/single-carrier symbol stream is provided to different antennas 452 via the transmitting device 454. Each transmitting device 454 first converts a baseband symbol stream provided by the multi-antenna transmitting processor 457 into a radio frequency stream, which is then provided to different antennas 452.

In the transmission from the first communication device 450 to the second communication device 410, the function at the second communication device 410 is similar to the receiving function at the first communication device 450 as described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 may be provided to the core network.

As one embodiment, the first communication device 450 apparatus comprises: at least one processor and at least one memory, the at least one memory comprising a computer program code; and the at least one memory and the computer program code are configured to be used together with the at least one processor, and the first communication device 450 apparatus at least: receives a first message, the first message being used for determining at least a first RS resource; and sends first channel information and a first PMI in a first physical layer channel, wherein a measurement for the first RS resource is used for generating the first channel information and the first PMI.

As one embodiment, the first communication device 450 comprises: a memory storing a computer-readable instruction program, the computer-readable instruction program generating actions when executed by at least one processor, and the actions comprising: receiving the first message, the first message being used for determining at least the first RS resource; and sending the first channel information and the first PMI in the first physical layer channel, wherein the measurement for the first RS resource is used for generating the first channel information and the first PMI.

As one embodiment, the second communication device 410 comprises: at least one processor and at least one memory, the at least one memory comprising a computer program code; and the at least one memory and the computer program code are configured to be used together with the at least one processor. The second communication device 410 at least: sends the first message, the first message being used for determining at least the first RS resource; and receives the first channel information and the first PMI in the first physical layer channel, wherein the measurement for the first RS resource is used for generating the first channel information and the first PMI.

As one embodiment, the second communication device 410 comprises: a memory storing a computer-readable instruction program, the computer-readable instruction program generating actions when executed by at least one processor, and the actions comprising: sending the first message, the first message being used for determining at least the first RS resource; and receiving the first channel information and the first PMI in the first physical layer channel, wherein the measurement for the first RS resource is used for generating the first channel information and the first PMI.

As one embodiment, the first communication device 450 corresponds to a first node in the present application.

As one embodiment, the second communication device 410 corresponds to a second node in the present application.

As one embodiment, the first communication device 450 is one piece of UE, and the second communication device 410 is one base station.

As one embodiment, the antenna 452, the receiving device 454, the multi-antenna receiving processor 458, and the receiving processor 456 are used for the measurement indicating the first RS resource.

As one embodiment, the controller/processor 459 is used for the measurement indicating the first RS resource.

As one embodiment, the controller/processor 459 is used for generating the first channel information.

As one embodiment, the controller/processor 459 is used for generating the first PMI.

As one embodiment, the antenna 452, the transmitting device 454, the multi-antenna transmitting processor 457, the transmitting processor 468, and the controller/processor 459 are used for sending the first channel information.

As one embodiment, the antenna 420, the transmitting device 418, the multi-antenna transmitting processor 471, and the transmitting processor 416 are used for sending a reference signal on the at least first RS resource.

As one embodiment, the controller/processor 475 is used for sending the reference signal on the at least first RS resource.

As one embodiment, the antenna 420, the receiving device 418, the multi-antenna receiving processor 472, the receiving processor 470, and the controller/processor 475 are used for receiving the first channel information.

As one embodiment, the antenna 420, the receiving device 418, the multi-antenna receiving processor 472, the receiving processor 470, and the controller/processor 475 are used for receiving the first PMI.

### Embodiment 5

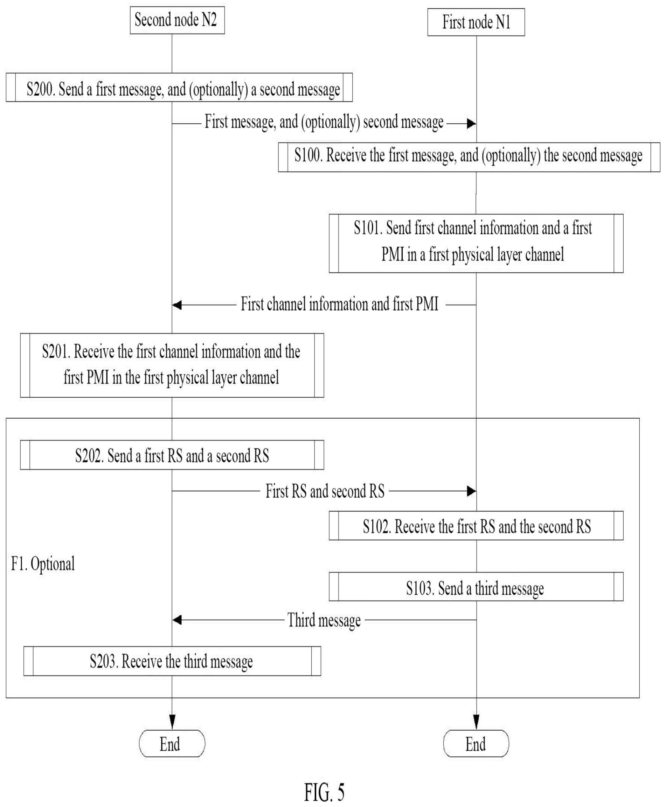

Embodiment 5 illustrates a flowchart of a transmission between a first node and a second node according to one embodiment of the present application, as shown in FIG. 5. In FIG. 5, steps in a block F1 are optional.

For a first node N1, in step S100, a first message is received, and the first message is used for determining at least a first RS resource; in step S101, first channel information and a first PMI are sent in a first physical layer channel; in step S102, a first RS and a second RS are received; and in step S103, a third message is sent.

For a second node N2, in step S200, the first message is sent; in step S201, the first channel information and the first PMI are received in the first physical layer channel; in step S202, the first RS and the second RS are sent; and in step S203, the third message is received.

In Embodiment 5, a measurement for the first RS resource is used for generating the first channel information and the first PMI; and the first channel information meets at least one of the following:
a channel parameter recovered by the second node N2 based on the first channel information received is unknown to the first node N1;
a generator for generating the first channel information is obtained based on training; and
the first channel information is CSI defined in 3GPP Rel-18 or a later version.

In Embodiment 5, at least the first channel information and at least the first PMI are used for multi-antenna sending of the first RS and multi-antenna sending of the second RS, respectively; and the third message depends on at least one of a received quality of the first RS and a received quality of the second RS.

As one embodiment, the first node N1 receives a second message in the step S100; and the second node N2 sends the second message in the step S200, wherein the second message is used for determining a CSI reference resource for the first channel information and a CSI reference resource for the first PMI.

The CSI reference resources are frequency domain resources and time domain resources associated with corresponding CSI reporting.

Using an NR system as an example: in frequency domain, the CSI reference resource comprises a group of downlink PRBs corresponding to a band associated with derived CSI; and in time domain, the CSI reference resource comprises one downlink slot. This downlink slot is an n-th slot preceding an uplink slot occupied by the corresponding CSI reporting (i.e., the first physical layer channel), wherein n is a non-negative integer. For the specific definition of the CSI reference resource in the NR system, please refer to Section 5.2.2.5 of TS38.214.

As one embodiment, the multi-antenna sending refers to generating antenna ports through antenna virtualization (or superposition).

As one embodiment, the multi-antenna sending refers to precoding.

As one embodiment, the multi-antenna sending refers to beamforming.

Generally, how the second node N2 executes multi-antenna sending of the first RS and the second RS is determined by a device supplier and does not require standardization. Some non-limiting embodiments are provided below.

As one embodiment, the second node N2 determines a precoding vector or beamforming vector corresponding to each antenna port used for sending the first RS according to a plurality of pieces of channel information received, and the first channel information is one of the plurality of pieces of channel information; the plurality of pieces of channel information are all generated by the same training-based generator. Or, the plurality of pieces of channel information are all non-codebook; and the first channel information is one of the plurality of pieces of channel information.

As one embodiment, the second node N2 determines a precoding vector or beamforming vector corresponding to each antenna port for sending the second RS according to a plurality of PMIs received, and the first PMI is one of the plurality of PMIs.

As one embodiment, the second node N2 determines a precoding vector or beamforming vector corresponding to each antenna port for sending the first RS according to the first channel information received; and the second node N2 determines a precoding vector or beamforming vector corresponding to each antenna port for sending the second RS according the first PMI received.

As one embodiment, the second message and the first message belong to the same RRC IE.

As one embodiment, a name of the same RRC IE comprises CSI-ReportConfig.

As one embodiment, the same RRC IE is CSI-ReportConfig IE.

The above embodiments maintain good compatibility with existing standards.

As one embodiment, the first message is an RRC signaling, and the second message is an MAC CE.

As one embodiment, the first message is the RRC signaling, and the second message is DCI.

The above two embodiments facilitate faster switching between different types of CSI applications, thereby better monitoring CSI quality.

As one embodiment, the first RS and the second RS are respectively in different RS resources.

As one embodiment, the first RS and the second RS are respectively in different CSI-RS resources.

The above embodiments maintain good compatibility with existing systems and can accurately monitor CSI performance.

As one embodiment, the first RS and the second RS are respectively sent by at least one demodulation reference signal (DMRS) port.

As one embodiment, the first RS and the second RS belong to a DMRS of the same physical downlink shared channel (PDSCH).

As one embodiment, the same PDSCH is scheduled by first DCI, and the first DCI is used for determining that: at least the first channel information and at least the first PMI are used for multi-antenna sending of the first RS and multi-antenna sending of the second RS, respectively.

As one embodiment, the first DCI is downlink grant DCI.

As one embodiment, the first RS is sent by at least one DMRS port, and the second RS is sent by at least one phase-tracking reference signal (PT-RS) port.

As one embodiment, one or more DMRS ports sending the first RS are associated with one PT-RS port sending the second RS.

As one embodiment, any DMRS port sending the first RS is associated with one of two PT-RS ports sending the second RS.

As one embodiment, one PT-RS port and its associated DMRS port are quasi co-located (QCL).

As one embodiment, a QCL type between one PT-RS port and its associated DMRS port comprises at least one of a typeA or a typeD.

As one embodiment, one PT-RS port is used for phase tracking of its associated DMRS port.

As one embodiment, one PT-RS port and its associated DMRS port have the same small-scale fading feature.

As one embodiment, the first RS and the second RS are sent respectively by different PT-RS ports.

As one embodiment of the above embodiments, the first RS is used for demodulating one PDSCH, and the second RS is used for phase tracking of the one PDSCH.

Compared to using a CSI-RS to monitor CSI quality, using the DMRS or the PT-RS can avoid introducing additional air interface resource overhead and improve transmission efficiency.

As one embodiment, the third message is used for indicating whether a difference value between the received quality of the first RS and the received quality of the second RS exceeds a specific threshold, wherein the specific threshold is configurable or is default.

As one embodiment, the difference value between the received quality of the first RS and the received quality of the second RS exceeding the specific threshold is used for triggering the third message, wherein the specific threshold is configurable or is default.

As one embodiment, the received quality is reference signal received power (RSRP).

As one embodiment, the received quality is reference signal received quality (RSRQ).

As one embodiment, the received quality is an equivalent block error rate (BLER) of the PDSCH calculated based on the RSRP.

As one embodiment, the received quality is the equivalent block error rate (BLER) of a physical downlink control channel (PDCCH) calculated based on the RSRP.

As one embodiment, the third message is used for indicating one of the RSRP of the first RS and the RSRP of the second RS.

As one embodiment, the third message is used for indicating one of the RSRP of the first RS and the RSRP of the second RS.

As one embodiment, the third message is used for indicating at least one of a CQI based on the first channel information and a CQI based on the first PMI.

As one embodiment, the third message is sent on the physical uplink control channel (PUCCH).

As one embodiment, the third message is sent on the physical uplink shared channel (PUSCH).

As one embodiment, the third message is uplink control information (UCI).

The above embodiments can quickly switch between the PMI and training-based channel information, preventing low-performance CSI from affecting transmission efficiency.

As one embodiment, the CSI reference resource for the first channel information and the CSI reference resource for the first PMI are orthogonal in frequency domain (i.e., there is no overlapping).

As one embodiment, the CSI reference resource for the first channel information and the CSI reference resource for the first PMI are orthogonal in time domain (i.e., there is no overlapping).

As one embodiment, the first channel information and the first PMI correspond to different layers in space domain.

As one embodiment, an RI corresponding to the first PMI is not less than an RI corresponding to the first channel information.

As one embodiment, layers for the first channel information are a subset of layers for the first PMI.

As one embodiment, the third message comprises a first CQI, wherein the first CQI is associated with the first channel information.

As one embodiment, the third message comprises a second CQI, wherein the calculation of the second CQI is conditional on the use of the first PMI, or the calculation of the second CQI is based on a measurement for the second RS.

As one embodiment, the first CQI being associated with the first channel information refers to: the first CQI is based on the measurement for the first RS.

As one embodiment, the first CQI being associated with the first channel information refers to: the first CQI is conditional on a precoding matrix indicated by the first channel information.

As one embodiment, the first CQI being associated with the first channel information refers to: the first CQI is conditional on the use of a virtual precoding matrix.

As one embodiment, the virtual precoding matrix is one precoding matrix in a legal codebook that is closest to the precoding matrix indicated by the first channel information.

As one embodiment, the virtual precoding matrix is one precoding matrix selected from a legal codebook according to a raw channel matrix.

In the above embodiments, the legal codebook comprises codebooks defined in cellular protocols of Release 17 and previous versions, such as a type I codebook, a type II codebook, or an enhanced type II codebook in an NR system.

Generally, how to select a precoding matrix from a legal codebook is implementation-dependent and left to each manufacturer to determine; and common schemes comprise maximizing spatial projection or maximizing channel capacity, etc. A typical but non-limiting implementation is described below:
the first node N1 first measures a downlink RS (e.g., the first RS) to obtain the raw channel matrix (or the precoding matrix indicated by the first channel information) *H*_{r×*t*} , wherein *r, t* are the number of receiving antennas and the number of antenna ports for sending, respectively; under the condition of using a precoding matrix W_{t×*l*}, the encoded channel parameter matrix is H_{r×*t*} · W_{t×*l*}, wherein *l* is a rank or the number of layers; and an equivalent channel capacity of H_{r×*t*} · W_{t*×l*} is calculated using criteria such as a signal interference noise ratio (SINR), an exponential effective SINR mapping (EESM), or a received block mean mutual information ratio (RBIR). Further, the calculation of the equivalent channel capacity may also consider the noise and interference estimated by the first node N1. If the downlink RS comprises RS resources used for an interference measurement, the first node N1 may use these RS resources to more accurately measure interference or noise. The first node N1 selects the precoding matrix corresponding to the maximum equivalent channel capacity from the legal codebook as the virtual precoding matrix.

The first CQI is determined based on the equivalent channel capacity by a table lookup or other methods.

It should be noted that when the first node N1 and the second node N2 use different channel reconstruction models, their understanding of the precoding matrix indicated by the first channel information may not be the same.

Typically, the first channel information is generated based on an artificial intelligence method.

Typically, a first encoder is used for generating the first channel information, and the first encoder is obtained based on training.

As one embodiment, the measurement for the first RS resource is used for generating a first matrix group, the first matrix group is used for generating the first CQI, the first matrix group can only be obtained for the first node N1, the first matrix group comprises at least one channel matrix, and the first matrix group is associated with the first channel information.

The above method allows the first node N1 and the second node N2 to use different trained models, which improves the degree of freedom of the hardware manufacturer.

### Embodiment 6a

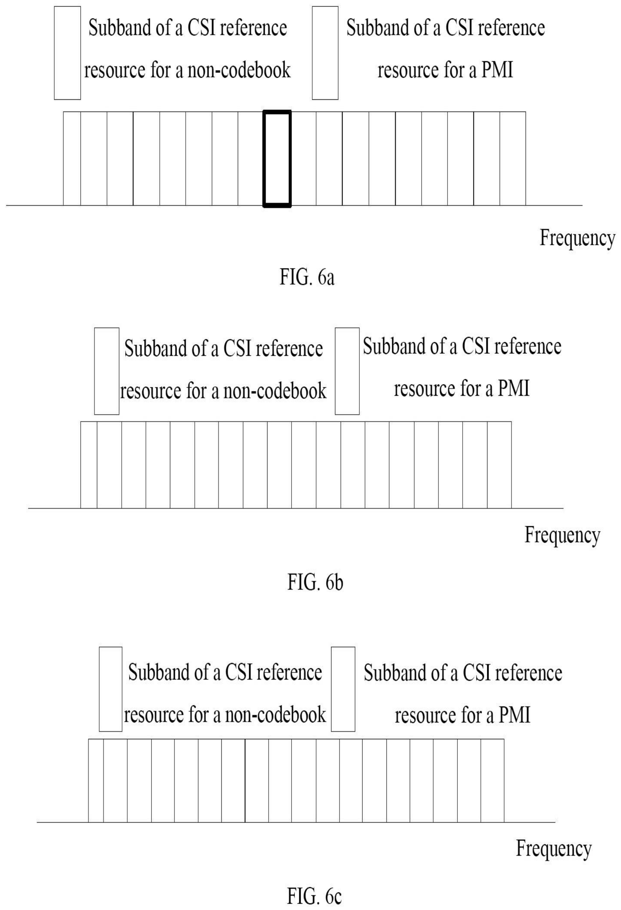

Embodiment 6a illustrates a schematic diagram of a CSI reference resource according to one embodiment of the present application, as shown in FIG. 6a. In FIG. 6a, a blank square represents one subband of a CSI reference resource for a non-codebook, and a gray-filled square represents one subband of a CSI reference resource for a PMI.

In Embodiment 6a, the CSI reference resource for first channel information belongs to the subband of the CSI reference resource for the non-codebook in frequency domain; the CSI reference resource for a first PMI belongs to the subband of the CSI reference resource for the PMI in frequency domain; subbands of the CSI reference resource for the non-codebook are contiguous in frequency domain; and subbands of the CSI reference resource for the PMI are contiguous in frequency domain.

As one embodiment, the number of the subbands of the CSI reference resource for the non-codebook is the same as the number of the subbands for the CSI reference resource for the PMI.

As one embodiment, a first RS and a second RS are DMRSs for two PDSCHs, respectively, and the two PDSCHs occupy the subbands of the CSI reference resources for the non-codebook and the subbands of the CSI reference resources for the PMI, respectively.

As one embodiment, the first RS and the second RS are PT-RSs for two PDSCHs, respectively, and the two PDSCHs occupy the subbands of the CSI reference resources for the non-codebook and the subbands of the CSI reference resources for the PMI, respectively.

As one embodiment, no subband is configured as both the subband of the CSI reference resource for the non-codebook and the subband of the CSI reference resource for the PMI.

As one sub-embodiment of any of the above two embodiments, for the first RS and the second RS, a frequency domain resource of the PDSCH corresponding to any RS is used for implicitly indicating whether multi-antenna sending of this RS is based on a non-codebook (channel matrix information) or a PMI (CSI reporting).

One advantage of Embodiment 6a is that it ensures that the subbands of the CSI reference resources for the non-codebook and the subbands of the CSI reference resources for the PMI are all localized, thereby providing good compatibility with existing PDSCH resource allocation schemes.

One subband usually comprises at least one physical resource block (PRB). The following provides some subband-related embodiments. Unless otherwise specified, these subband-related embodiments are also applicable to Embodiment 6b and Embodiment 6c.

As one embodiment, the subbands of the CSI reference resources for the non-codebook and the subbands of the CSI reference resources for the PMI are configured by two csi-ReportingBands.

As one embodiment, all subbands in FIG. 6a belong to a first BWP or constitute a first BWP. Except for a subband at the outermost edge of the first BWP, the number of PRBs comprised in one subband is P1, wherein P1 is a positive integer multiple of 4; and P1 is indicated by a higher-layer signaling, or P1 is related to the number of PRBs comprised in the first BWP.

As one embodiment, the number of PRBs comprised in a subband with a lowest frequency domain position in the first BWP is P1 - (Ns mod P1), wherein Ns is an index of a starting PRB in the first BWP; and the number of PRBs comprised in a last subband (the subband with a highest frequency domain position) in the first BWP is (Ns + Nw) mod P1 or is P1, wherein Nw is the number of PRBs comprised in the first BWP.

As one embodiment, P1 is one of 4, 8, 16 or 32.

As one embodiment, at least one subband (e.g., a small square identified by a thick line box) is configured as both the subband of the CSI reference resource for the non-codebook and the subband of the CSI reference resource for the PMI.

As one sub-embodiment of the above embodiments, a base station sends a downlink signaling to UE to explicitly indicate that the first RS and the second RS are based on a non-codebook (channel matrix information) and based on a PMI (CSI reporting), respectively.

As one embodiment, the downlink signaling is downlink grant DCI.

The non-codebook one in Embodiment 6a may be obtained after the precoding matrix passes through an AI/ML generator, or after the raw channel matrix passes through the AI/ML generator.

### Embodiment 6b

Embodiment 6b illustrates a schematic diagram of a CSI reference resource according to one embodiment of the present application, as shown in FIG. 6b. In FIG. 6b, a blank square represents a subband of a CSI reference resource for a non-codebook, and a gray-filled square represents a subband of a CSI reference resource for a PMI.

In Embodiment 6b, the CSI reference resource for first channel information belongs to the subband of the CSI reference resource for the non-codebook in frequency domain; the CSI reference resource for a first PMI belongs to the subband of the CSI reference resource for the PMI in frequency domain; and subbands of CSI reference resources for the non-codebook and subbands of CSI reference resources for the PMI alternate in frequency domain.

As one embodiment, the number of the subbands of the CSI reference resource for the non-codebook is the same as the number of the subbands for the CSI reference resource for the PMI.

As one embodiment, a first RS and a second RS are DMRSs for one PDSCH, and the subbands occupied by (i.e., distributed over) the one PDSCH comprise at least one subband of the CSI reference resources for the non-codebook and at least one subband of the CSI reference resources for the PMI.

As one embodiment, the first RS and the second RS are respectively a DMRS and a PT-RS of one PDSCH, and the subbands occupied by (i.e., distributed over) the one PDSCH comprise at least one subband of the CSI reference resources for the non-codebook and at least one subband of the CSI reference resources for the PMI.

One advantage of Embodiment 6b is that the CSI reference resources for the non-codebook and the CSI reference resources for the PMI obtain a similar frequency domain diversity effect, thereby ensuring fairness in the comparison of the first channel information and the first PMI.

Another advantage of Embodiment 6b is that it allows a base station to recover a full-spectrum-band non-codebook-based channel matrix and a full-spectrum-band PMI-based channel matrix through a frequency domain difference value method; and thus, the performances of the first channel information and the first PMI on any subband can be compared.

As one embodiment, at least one PRB comprises both a resource element (RE) occupied by the first RS and an RE occupied by the second RS.

As one embodiment, a PRB of a first RS distribution is the same as a PRB of a second RS distribution.

### Embodiment 6c

Embodiment 6c illustrates a schematic diagram of a CSI reference resource according to one embodiment of the present application, as shown in FIG. 6c. In FIG. 6c, a blank square represents a subband of a CSI reference resource for a non-codebook, and a gray-filled square represents a subband of a CSI reference resource for a PMI.

In Embodiment 6c, the CSI reference resource for first channel information belongs to the subband of the CSI reference resource for the non-codebook in frequency domain; the CSI reference resource for a first PMI belongs to the subband of the CSI reference resource for the PMI in frequency domain; and the subbands of the CSI reference resources for the non-codebook and the subbands of the CSI reference resources for the PMI are independently configured.

As one sub-embodiment of the above embodiment, the subbands of the CSI reference resources for the non-codebook and the subbands of the CSI reference resources for the PMI are configured by two csi-ReportingBands.

The above embodiment can achieve maximum configuration flexibility.

As one embodiment, a first RS and a second RS are DMRSs for one PDSCH, and the subbands occupied by (i.e., distributed over) the one PDSCH comprise at least one subband of the CSI reference resources for the non-codebook and at least one subband of the CSI reference resources for the PMI.

As one embodiment, the first RS and the second RS are respectively a DMRS and a PT-RS of one PDSCH, and the subbands occupied by (i.e., distributed over) the one PDSCH comprise at least one subband of the CSI reference resources for the non-codebook and at least one subband of the CSI reference resources for the PMI.

One advantage of Embodiment 6c is that it has maximum configuration flexibility.

### Embodiment 6d

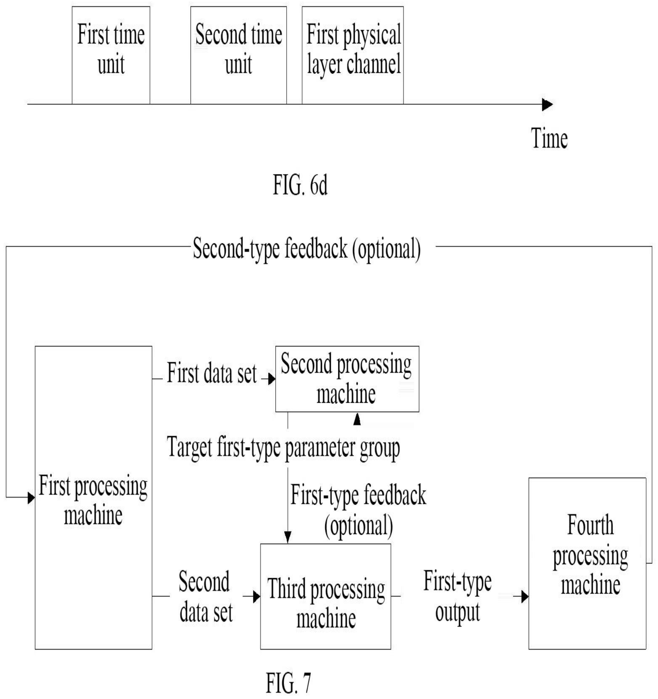

Embodiment 6d illustrates a schematic diagram of a CSI reference resource according to one embodiment of the present application, as shown in FIG. 6d. In FIG. 6d, a first time unit and a second time unit precede a first physical layer channel.

In Embodiment 6d, the CSI reference resource for first channel information and the CSI reference resource for a first PMI are orthogonal in time domain.

As one embodiment, the CSI reference resource for the first channel information and the CSI reference resource for the first PMI are the first time unit and the second time unit respectively in time domain.

The above embodiment is particularly suitable for a situation where a time required to calculate the first channel information is greater than a time required to calculate the first PMI.

As one embodiment, the CSI reference resource for the first channel information and the CSI reference resource for the first PMI are the second time unit and the first time unit respectively in time domain.

The above embodiment is particularly suitable for a situation where a time required to calculate the first channel information is less than a time required to calculate the first PMI.

As one embodiment, the first time unit and the second time unit are respectively one slot.

As one embodiment, the first time unit and the second time unit respectively comprise a positive integer number of multi-carrier symbols.

As one embodiment, the multi-carrier symbol is an orthogonal frequency division multiplexing (OFDM) symbol.

As one embodiment, the multi-carrier symbol is a discrete Fourier transform spread OFDM (DFT-S-OFDM) symbol.

As one embodiment, the multi-carrier symbol is a filter bank multi carrier (FBMC) symbol.

As one embodiment, the multi-carrier symbol comprises a cyclic prefix (CP).

As one embodiment, a time interval of the first time unit from the first physical layer channel is configurable or is default; and a time interval of the second time unit from the first physical layer channel is configurable or is default.

One advantage of Embodiment 6d is that it increases the density of channel matrix feedback in time domain, thereby improving downlink transmission performance.

It should be noted that Embodiment 6d only describes the time domain characteristics of the CSI reference resources, which does not prevent the orthogonality of the CSI reference resources in frequency domain. For example, Embodiment 6d can be combined with any scheme of Embodiments 6a, 6b, and 6c.

### Embodiment 7

Embodiment 7 illustrates a schematic diagram of an artificial intelligence processing system according to one embodiment of the present application, as shown in FIG. 7. FIG. 7 comprises a first processing machine, a second processing machine, a third processing machine, and a fourth processing machine.

In Embodiment 7, the first processing machine sends a first data set to the second processing machine, the second processing machine generates a target first-type parameter group based on the first data set, the second processing machine sends the generated target first-type parameter group to the third processing machine, and the third processing machine processes a second data set using the target first-type parameter group to obtain a first-type output, and then sends the first-type output to the fourth processing machine.

As one embodiment, the third processing machine sends a first-type feedback to the second processing machine, and the first-type feedback is used for triggering recalculation or updating of the target first-type parameter group.

As one embodiment, the fourth processing machine sends a second-type feedback to the first processing machine, and the second-type feedback is used for generating the first data set or the second data set, or the second-type feedback is used for triggering sending of the first data set or the second data set.

As one embodiment, the first processing machine generates the first data set and the second data set according to measurements for a first wireless signal, the first wireless signal comprising a downlink RS.

As one embodiment, the second data set is obtained based on a measurement for a first RS resource.

As one embodiment, the first processing machine and the third processing machine belong to a first node, and the fourth processing machine belongs to a second node.

As one embodiment, the first-type output comprises at least first channel information.

As one embodiment, the first-type output comprises a plurality of pieces of non-codebook reporting, and the first channel information is one of the plurality of pieces of non-codebook reporting.

As one embodiment, the second processing machine belongs to the first node.

The above embodiments avoid transmitting the first data set to the second node.

As one embodiment, the second processing machine belongs to the second node.

The above embodiments reduce the complexity of the first node.

As one embodiment, the first data set is training data, and the second data set is interference data. The second processing machine is used for training a model, and the trained model is described by the target first-type parameter group.

As one embodiment, the third processing machine constructs a model according to the target first-type parameter group, then inputs the second data set into the constructed model to obtain the first-type output, and then sends the first-type output to the fourth processing machine.

As one sub-embodiment of the above embodiments, the third processing machine comprises a first encoder of the present application, the first encoder is described by the target first-type parameter group, and the generation of the first-type output is executed by the first encoder.

As one embodiment, the third processing machine calculates an error between the first-type output and actual data to determine the performance of the trained model; and the actual data is data transmitted by the first processing machine received after the second data set.

The above embodiments are particularly suitable for prediction-related reporting.

As one embodiment, the third processing machine uses the first-type output to recover a reference data set, and an error between the reference data set and the second data set is used for generating the first-type feedback.

Recovering the reference data set usually uses an inverse operation similar to that of the target first-type parameter group. The above embodiment is particularly suitable for reporting related to CSI compression.

As one embodiment, the first-type feedback is used for reflecting the performance of the trained model; and when the performance of the trained model fails to meet requirements, the second processing machine recalculates the target first-type parameter group.

As one sub-embodiment of the above embodiments, the third processing machine comprises a first reference decoder of the present application, and the first reference decoder is described by the target first-type parameter group. An input of the first reference decoder comprises the first-type output, and an output of the first reference decoder comprises the reference data set.

Typically, the performance of the trained model is considered to fail to meet requirements when the error is excessively large or has not been updated for a long time.

As one embodiment, the third processing machine belongs to the second node, and the first node reports the target first-type parameter group to the second node.

### Embodiment 8

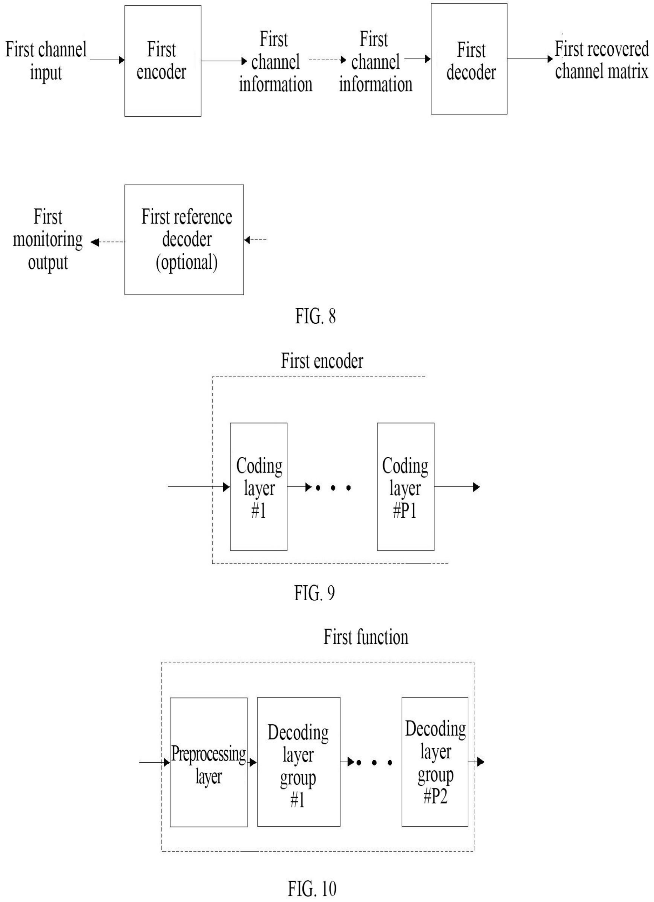

Embodiment 8 illustrates a flowchart of a transmission of first channel information according to one embodiment of the present application, as shown in FIG. 8. In FIG. 8, a first reference decoder is optional.

In Embodiment 8, a first encoder and a first decoder belong to a first node and a second node, respectively, wherein the first encoder belongs to a first receiver, and the first decoder belongs to a second receiver.

The first receiver generates the at least first channel information using the first encoder, wherein an input of the first encoder comprises a first channel input, and the first encoder is obtained through training; and the first channel input is obtained according to a measurement for a first RS resource group.

The first node feeds the first channel information back to the second node via an air interface.

The second receiver generates a first recovered channel matrix using the first decoder, wherein an input of the first decoder comprises the first channel information, and the first decoder is obtained through training.

Theoretically, the first encoder and the first decoder should perform inverse operations to ensure that the first channel input is the same as the first recovered channel matrix.

As one embodiment, due to factors such as implementation complexity, or air interface overhead, or delay, the first encoder and the first decoder in Embodiment 8 cannot ensure complete cancellation. Therefore, it cannot be ensured that the first channel input and the first recovered channel matrix are completely the same, resulting in different understandings of the two for a precoding matrix represented by the first channel information.

As one embodiment, the first channel input is a raw channel matrix.

As one embodiment, the first channel input is a precoding matrix.

As one embodiment, the first receiver also comprises the first reference decoder, an input of the first reference decoder comprises the first channel information, and an output of the first reference decoder comprises a first monitoring output.

As one embodiment, a first channel matrix is the first monitoring output, and the first reference decoder and the first decoder cannot be considered the same.

In the above embodiments, the first reference decoder and the first decoder may be independently generated or independently maintained. Therefore, although they both aim to execute the inverse operations of the first encoder, they may only be approximate.

As one embodiment, the first receiver comprises a third processing machine in Embodiment 7.

As one embodiment, the first channel input belongs to a second data set in Embodiment 7.

As one embodiment, the training of the first encoder is executed at the first node.

As one embodiment, the training of the first encoder is executed by the second node.

As one embodiment, the first recovered channel matrix is known only to the second node.

As one embodiment, the first recovered channel matrix and the first channel matrix cannot be considered the same.

### Embodiment 9

Embodiment 9 illustrates a schematic diagram of a first encoder according to one embodiment of the present application, as shown in FIG. 9. In FIG. 9, the first encoder comprises P1 encoding layers, namely, encoding layers #1, #2, ..., #P1.

As one embodiment, P1 is 2, namely the P1 coding layers comprise a coding layer #1 and a coding layer #2, the coding layer #1 and the coding layer #2 being respectively a convolutional layer and a fully connected layer; and in the convolutional layer, at least one convolution kernel is used for convolving a first channel input to generate a corresponding feature map. At least one feature map output by the convolutional layer is reshaped into one vector and input to the fully connected layer; and the fully connected layer converts the one vector into first channel information. For a more detailed description, please refer to CNN-related technical literatures, such as Chao-Kai Wen, Deep Learning for Massive MIMO CSI Feedback, IEEE

WIRELESS COMMUNICATIONS LETTERS, VOL. 7, NO. 5, OCTOBER 2018.

As one embodiment, P1 is 3, namely the P1 coding layers comprise the fully connected layer, the convolutional layer, and a pooling layer.

### Embodiment 10

Embodiment 10 illustrates a schematic diagram of a first function according to one embodiment of the present application, as shown in FIG. 10. In FIG. 10, the first function comprises a preprocessing layer and P2 decoding layer groups, namely, decoding layer groups #1, #2, ..., #P2, each decoding layer group comprising at least one decoding layer.

The structure of the first function is applicable to a first decoder and a first reference decoder in Embodiment 8.

As one embodiment, the preprocessing layer is one fully connected layer, and a size of first channel information is expanded to a size of a first channel input.

As one embodiment, any two decoding layer groups among the P2 decoding layer groups have the same structure, and the structure comprises the number of decoding layers comprised, sizes of input parameters and sizes of output parameters of each decoding layer comprised, etc.

As one embodiment, a second node indicates P2 and the structure of the decoding layer group to a first node, and the first node indicates other parameters of the first function through a second signaling.

As one embodiment, the other parameters comprise at least one of a threshold of an activation function, a size of a convolution kernel, a stride of the convolution kernel, and weights between feature maps.

### Embodiment 11

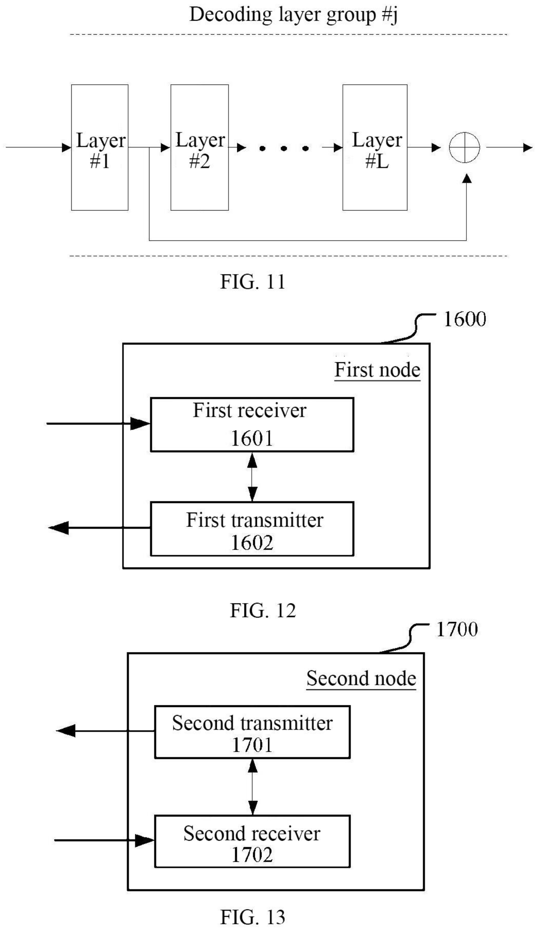

Embodiment 11 illustrates a schematic diagram of one decoding layer group according to one embodiment of the present application, as shown in FIG. 11. In FIG. 11, the decoding layer group #j comprises L layers, namely, Layers #1, #2, ..., #L; and the decoding layer group is any decoding layer group among the P2 decoding layer groups.

As one embodiment, L is 4, a first layer of the L layers is an input layer, and the last three layers of the L layers are convolutional layers. For a more detailed description, please refer to CNN-related technical literatures, such as Chao-Kai Wen, Deep Learning for Massive MIMO CSI Feedback, IEEE WIRELESS COMMUNICATIONS LETTERS, VOL. 7, NO. 5, OCTOBER 2018.

As one embodiment, the L layers comprise at least one convolutional layer and one pooling layer.

### Embodiment 12

Embodiment 12 illustrates a structural block diagram of a processing apparatus used in a first node according to one embodiment of the present application, as shown in FIG. 12. In FIG. 12, a processing apparatus 1600 in the first node comprises a first receiver 1601 and a first transmitter 1602.

The first receiver 1601 receives a first message, the first message being used for determining at least a first RS resource; and the first transmitter 1602 sends first channel information and a first PMI in a first physical layer channel.

In Embodiment 12, a measurement for the first RS resource is used for generating the first channel information and the first PMI; and the first channel information meets at least one of the following:
a channel parameter recovered by a recipient based on the first channel information received is unknown to the first node;
a generator for generating the first channel information is obtained based on training;
the first channel information does not belong to CSI defined in 3GPP Rel-17 or a previous version of 3GPP Rel-17; and
the first channel information indicates a non-codebook precoding matrix.

As one embodiment, the first receiver 1601 receives a second message, the second message being used for determining a CSI reference resource for the first channel information and a CSI reference resource for the first PMI.

As one embodiment, the CSI reference resource for the first channel information and the CSI reference resource for the first PMI are orthogonal in frequency domain or orthogonal in time domain.

As one embodiment, the first channel information and the first PMI correspond to different layers in space domain.

As one embodiment, the first receiver 1601 receives a first RS and a second RS; and the first transmitter 1602 sends a third message,
wherein at least the first channel information and at least the first PMI are used for multi-antenna sending of the first RS and multi-antenna sending of the second RS, respectively; and the third message depends on at least one of a received quality of the first RS and a received quality of the second RS.

As one embodiment, a first node 1600 is one piece of user equipment.

As one embodiment, the first transmitter 1602 comprises at least one of an antenna 452, a transmitting device/receiving device 454, a multi-antenna transmitting device processor 457, a transmitting processor 468, a controller/processor 459, a memory 460, and a data source 467 in FIG. 4 of the present application.

As one embodiment, the first transmitter 1602 comprises the antenna 452, a transmitting device/receiving device 454, a multi-antenna transmitting processor 457, a transmitting processor 468, the controller/processor 459, the memory 460, and the data source 467 in FIG. 4 of the present application.

As one embodiment, the first receiver 1601 comprises at least the first five of the antenna 452, a receiving device 454, a multi-antenna receiving processor 458, a receiving processor 456, the controller/processor 459, the memory 460, and the data source 467 in FIG. 4 of the present application.

As one embodiment, the first receiver 1601 comprises at least the first four of the antenna 452, the receiving device 454, the multi-antenna receiving processor 458, the receiving processor 456, the controller/processor 459, the memory 460, and the data source 467 in FIG. 4 of the present application.

As one embodiment, the first receiver 1601 comprises at least the first three of the antenna 452, the receiving device 454, the multi-antenna receiving processor 458, the receiving processor 456, the controller/processor 459, the memory 460, and the data source 467 in FIG. 4 of the present application.

### Embodiment 13

Embodiment 13 illustrates a structural block diagram of a processing apparatus used in a second node according to one embodiment of the present application, as shown in FIG. 13. In

FIG. 13, a processing device 1700 in the second node comprises a second transmitter 1701 and a second receiver 1702.

The second transmitter 1701 sends a first message, the first message being used for determining at least a first RS resource; and the second receiver 1702 receives first channel information and a first PMI in a first physical layer channel.

In Embodiment 13, a measurement for the first RS resource is used for generating the first channel information and the first PMI; and the first channel information meets at least one of the following:
a channel parameter recovered by the second node based on the first channel information received is unknown to a sender of the first channel information;
a generator for generating the first channel information is obtained based on training; and
the first channel information does not belong to CSI defined in 3GPP Rel-17 or a previous version of 3GPP Rel-17.

As one embodiment, the second transmitter 1701 sends a second message, the second message being used for determining a CSI reference resource for the first channel information and a CSI reference resource for the first PMI.

As one embodiment, the second transmitter 1701 sends a first RS and a second RS; and the second receiver 1702 receives a third message,
wherein at least the first channel information and at least the first PMI are used for multi-antenna sending of the first RS and multi-antenna sending of the second RS, respectively; and the third message depends on at least one of a received quality of the first RS and a received quality of the second RS.

As one embodiment, the first RS and the second RS are on the same BWP.

As one embodiment, the CSI reference resource for the first channel information and the CSI reference resource for the first PMI are orthogonal in frequency domain or orthogonal in time domain.

As one embodiment, the first channel information and the first PMI correspond to different layers in space domain.

As one embodiment, a second node 1700 is one base station device.

As one embodiment, the second transmitter 1701 comprises an antenna 420, a transmitting device 418, a transmitting processor 416, and a controller/processor 475.

As one embodiment, the second transmitter 1701 comprises the antenna 420, the transmitting device 418, a multi-antenna transmitting processor 471, the transmitting processor 416, and the controller/processor 475.

As one embodiment, the second transmitter 1701 comprises the antenna 420, the transmitting device 418, the transmitting processor 416, and the controller/processor 475.

As one embodiment, the second transmitter 1701 comprises the antenna 420, the transmitting device 418, the multi-antenna transmitting processor 471, the transmitting processor 416, and the controller/processor 475.

As one embodiment, the second receiver 1702 comprises the antenna 420, a receiving device 418, a multi-antenna receiving processor 472, a receiving processor 470, and the controller/processor 475.

As one embodiment, the second receiver 1702 comprises the controller/processor 475.

### Embodiment 14

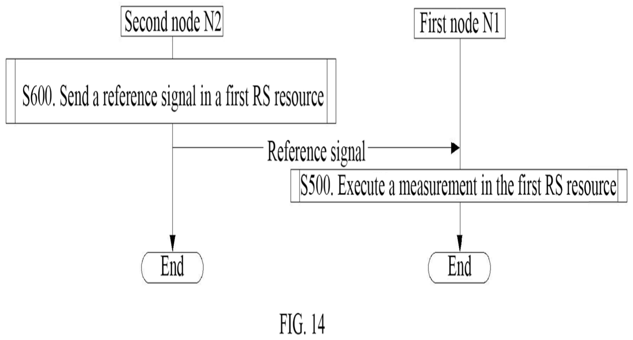

Embodiment 14 illustrates a flowchart of a measurement in a first RS resource group according to one embodiment of the present application, as shown in FIG. 14. The first RS resource group comprises a first RS resource.

In step S500, a first node N1 executes the measurement in the first RS resource group; and a second node N2 sends a reference signal in at least part of RS resources of the first RS resource group.

As one embodiment, the at least part of RS resources comprise the first RS resource for a channel measurement.

The specific implementation of the measurement executed by the first node N1 in the first RS resource group is determined by the hardware device manufacturer. The following is a non-limiting example:
A first node measures a channel parameter matrix for each PRB. The channel parameter matrix has Nt rows and Nr columns, wherein each element is a channel impulse response; Nt and Nr are respectively the number of antenna ports and the number of receiving antennas in one RS resource; and the first node combines the channel parameter matrices measured on all PRBs in each subband to obtain the channel matrix of each subband. An input of a first encoder comprises the channel matrices of part of or all subbands in a first frequency band resource group, or an input of the first encoder comprises eigenvectors of the channel matrices of part of or all the subbands in the first frequency band resource group.

As one embodiment, the second node N2 maintains zero power in at least one RS resource of the first RS resource group, and the at least one RS resource is used for an interference measurement.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled airplanes, aircrafts, small airplanes, mobile phones, tablet computers, notebooks, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices.The base station or system device in the present application includes but is not limited to macrocellular base stations, microcellular base stations, Femtocells, relay base stations, gNBs (NR nodes B), TRPs (Transmitter Receiver Points), and other wireless communication devices.

Those skilled in the art should understand that the present application may be implemented in other specified forms without departing from its core or basic features. Therefore, the embodiments disclosed at present should be regarded as descriptive rather than restrictive in any way. The scope of the invention is determined by the appended claims rather than the foregoing description, and all modifications within their equivalent meanings and areas are considered to be comprised therein.

## Claims

1. A first node used for wireless communication, comprising:
a first receiver receiving a first message, the first message being used for determining at least a first RS resource; and
a first transmitter sending first channel information and a first PMI in a first physical layer channel,
wherein a measurement for the first RS resource is used for generating the first channel information and the first PMI; and the first channel information meets at least one of the following:
a channel parameter recovered by a recipient based on the first channel information received is unknown to the first node;
a generator for generating the first channel information is obtained based on training; and
the first channel information does not belong to CSI defined in 3GPP Rel-17 or a previous version of 3GPP Rel-17.

2. The first node according to claim 1, **characterized by** comprising:
the first receiver receiving a second message, the second message being used for determining a CSI reference resource for the first channel information and a CSI reference resource for the first PMI.

3. The first node according to claim 1 or 2, **characterized in that** the CSI reference resource for the first channel information and the CSI reference resource for the first PMI are orthogonal in frequency domain or orthogonal in time domain.

4. The first node according to claim 1 or 2, **characterized in that** the first channel information and the first PMI correspond to different layers in space domain.

5. The first node according to any one of claims 1 to 4, **characterized by**:
the first receiver receiving a first RS and a second RS; and
the first transmitter sending a third message,
wherein at least the first channel information and at least the first PMI are used for multi-antenna sending of the first RS and multi-antenna sending of the second RS, respectively; and the third message depends on at least one of a received quality of the first RS and a received quality of the second RS.

6. A second node used for wireless communication, comprising:
a second transmitter sending a first message, the first message being used for determining at least a first RS resource; and
a second receiver receiving first channel information and a first PMI in a first physical layer channel,
wherein a measurement for the first RS resource is used for generating the first channel information and the first PMI; and the first channel information meets at least one of the following:
a channel parameter recovered by the second node based on the first channel information received is unknown to a sender of the first channel information;
a generator for generating the first channel information is obtained based on training; and
the first channel information does not belong to CSI defined in 3GPP Rel-17 or a previous version of 3GPP Rel-17.

7. The second node according to claim 6, **characterized by** comprising:
the second transmitter sending a second message, the second message being used for determining a CSI reference resource for the first channel information and a CSI reference resource for the first PMI.

8. The second node according to any one of claims 6 to 7, **characterized by** comprising:
the CSI reference resource for the first channel information and the CSI reference resource for the first PMI being orthogonal in frequency domain or orthogonal in time domain.

9. The second node according to any one of claims 6 to 7, **characterized by** comprising:
the first channel information and the first PMI corresponding to different layers in space domain.

10. The second node according to any one of claims 6 to 7, **characterized by** comprising:
the second transmitter sending a first RS and a second RS; and
the second receiver receiving a third message,
wherein at least the first channel information and at least the first PMI are used for multi-antenna sending of the first RS and multi-antenna sending of the second RS, respectively; and the third message depends on at least one of a received quality of the first RS and a received quality of the second RS.

11. A method in a first node used for wireless communication, comprising:
receiving a first message, the first message being used for determining at least a first RS resource; and
sending first channel information and a first PMI in a first physical layer channel,
wherein a measurement for the first RS resource is used for generating the first channel information and the first PMI; and the first channel information meets at least one of the following:
a channel parameter recovered by a recipient based on the first channel information received is unknown to the first node;
a generator for generating the first channel information is obtained based on training; and
the first channel information does not belong to CSI defined in 3GPP Rel-17 or a previous version of 3GPP Rel-17.

12. The method in a first node according to claim 11, **characterized by** comprising:
receiving a second message, the second message being used for determining a CSI reference resource for the first channel information and a CSI reference resource for the first PMI.

13. The method in a first node according to claim 12, **characterized in that**
the CSI reference resource for the first channel information and the CSI reference resource for the first PMI are orthogonal in frequency domain.

14. The method in a first node according to claim 12 or 13, **characterized by** comprising:
the first channel information and the first PMI corresponding to different layers in space domain.

15. The method in a first node according to any one of claims 12 to 14, **characterized by** comprising:
receiving a first RS and a second RS; and
sending a third message,
wherein at least the first channel information and at least the first PMI are used for multi-antenna sending of the first RS and multi-antenna sending of the second RS, respectively; and the third message depends on at least one of a received quality of the first RS and a received quality of the second RS.

16. A method in a second node used for wireless communication, comprising:
sending a first message, the first message being used for determining at least a first RS resource; and
receiving first channel information and a first PMI in a first physical layer channel,
wherein a measurement for the first RS resource is used for generating the first channel information and the first PMI; and the first channel information meets at least one of the following:
a channel parameter recovered by the second node based on the first channel information received is unknown to a sender of the first channel information;
a generator for generating the first channel information is obtained based on training; and
the first channel information does not belong to CSI defined in 3GPP Rel-17 or a previous version of 3GPP Rel-17.

17. The method in a second node according to claim 16, **characterized by** comprising:
sending a second message, the second message being used for determining a CSI reference resource for the first channel information and a CSI reference resource for the first PMI.

18. The method in a second node according to claim 16 or 17, **characterized in that**
the CSI reference resource for the first channel information and the CSI reference resource for the first PMI being orthogonal in frequency domain or orthogonal in time domain.

19. The method in a second node according to claim 16 or 17, **characterized in that**
the first channel information and the first PMI corresponding to different layers in space domain.

20. The method in a second node according to any one of claims 16 to 19, **characterized by** comprising:
sending a first RS and a second RS; and
receiving a third message,
wherein at least the first channel information and at least the first PMI are used for multi-antenna sending of the first RS and multi-antenna sending of the second RS, respectively; and the third message depends on at least one of a received quality of the first RS and a received quality of the second RS.
